# EUROPEAN PATENT APPLICATION

(11) **EP 4 545 871 A1**
(43) Date of publication of application: **30.04.2025**
(21) Application number: 24209008.2
(22) Date of filing: 25.10.2024
(51) Int. Cl.: F24F 13/02, F16L 55/033, F24F 13/24

(54) **NOISE DAMPER OF A VENTILATION DUCT**

(30) Priority: 27.10.2023 EE 202300029 U
(71) Applicant: Flexovent OÜ, 13520 Tallinn (EE); Aun, Üllar, 75401 Kiili alev (EE)
(72) Inventor: Aun, Üllar, 75401 Kiili alev (EE)
(74) Representative: AAA Patendibüroo OÜ

(57) **Abstract**

The invention relates to a noise damper 1 of a ventilation duct, which comprises an outer shell and panels 2, 3 and 4 of sound-absorbing material in it. An air duct 5 with a rectangular cross-section is formed between the panels 2, 3, 4, where the ends of the air duct 5 have matching nozzles 6, which form a transition from a rectangular cross-section of the air duct 5 to connect said air duct 5 to a ventilation pipe with a round cross-section. The nozzles 6 are placed inside the noise damper 1 so that the round cross-section connecting part 7 at the round cross-section end of the nozzle 6 extends through the end wall 8 of the outer shell.

## Description

### TECHNICAL FIELD

The invention falls within the field of ventilation systems and relates to a noise damper of a ventilation duct.

### BACKGROUND ART

A noise damper of a ventilation duct is known from the European patent application EP1580494 (published 28 September 2005). The noise damper has an internal air duct with a round cross-section, and the ends of the air duct have matching nozzles, or fittings, to connect the air duct of the noise damper to the ventilation pipes with a round cross-section. The nozzles between the air duct of the noise damper and the ventilation pipes are conical.

A noise damper of a ventilation duct, which has an internal air duct with a round cross-section, is known from the European patent application EP1998119 (published 3 December 2008). The ends of the air duct have nozzles to connect the air duct to the ventilation pipes with a round cross-section. The nozzles between the air duct and the ventilation pipes of the noise damper are implemented longitudinal as a smooth arch.

The damping efficiency of the noise damper is significantly dependent on the narrowness of the air duct going through the noise damper. The narrower the air duct, the closer the damping material on opposite sides of the air duct going through the noise damper is to each other, and the greater the damping efficiency.

In the solution known from EP1580494 and EP1998119 mentioned above, the air duct in the noise damper has a round cross-section, so reducing its diameter to increase the noise damping capacity will result in an increase in the aerodynamic drag of the noise damper. It is also more complex to manufacture a noise damper with a round cross-section air duct - special equipment is needed, which makes it expensive to manufacture.

A prior solution most similar to the present invention is known from the Netherlands patent application NL7612377A (published 10 May 1978), which describes a noise damper of a ventilation duct comprising an outer shell and panels of sound-absorbing material therein, wherein an air duct with a rectangular cross-section is formed between the panels. The noise damper includes nozzles at the ends of the air duct to form a transition at each end of the air duct to connect an air duct with a rectangular cross-section to a ventilation pipe with a round cross-section. The nozzles, with the connecting parts at their ends, are located outside the shell of the noise damper, i.e. noise can spread through the walls of the transition and these nozzles must therefore be isolated separately.

### DISCLOSURE OF INVENTION

The present invention provides a noise damper with an internal air duct with a rectangular cross-section, which is designed to be connected to ventilation pipes with a round cross-section.

To increase the noise damping efficiency, the two opposite sides of a duct of a noise damper with a rectangular or quadrangular cross-section can be brought relatively close to each other by selecting the cross-sectional proportions such that a cross-section is formed, where the duct is in one direction narrow and in other direction tall. The narrower the air duct, the closer the panels of the damping material on opposite sides of the duct of the noise damper are to each other, and the greater the damping efficiency.

However, a narrow air duct creates a high aerodynamic drag on the airflow going through the noise damper. To solve this problem, the present invention proposes an aerodynamic nozzle, or fitting, for use within the noise damper to direct the airflow through the air duct of the noise damper from a low resistance round cross-section nozzle to an air duct (i.e., a dampening duct) with a rectangular cross-section and from there again out of the noise damper through the nozzle.

The present invention proposes a noise damper of a ventilation duct, wherein the noise damper comprises an outer shell and panels of sound-absorbing material within said outer shell, wherein an air duct, or a damping duct, with a rectangular cross-section is formed between said panels. The noise damper comprises at each end of the air duct a nozzle forming at each end of the air duct a transition from a rectangular cross-section of the air duct to a round cross-section for connection to the ventilation pipe with a round cross-section.

The nozzles are placed inside the noise damper so that the round cross-section connecting part at the round cross-section end of the nozzle extends through the end wall of the outer shell.

In the present invention, the length of the nozzle between the rectangular cross-sectional end and the round cross-sectional end of the nozzle is 35% to 120% of the inner diameter of the round end of the nozzle.

In the present invention, the longer side of the rectangular cross-section end of the nozzle is 70% to 120% of the inner diameter of the round end of the nozzle.

In the present invention, the shorter side of the rectangular cross-section end of the nozzle is 25% to 60% of the inner diameter of the round end of the nozzle.

The dimensions of the longer and shorter sides of the rectangular cross-sectioned end of the nozzle are measured from the inside of the aforementioned air duct.

The nozzle is made of metal such as galvanized steel, plastic such as ABS, polyethylene, polypropylene, *etc.,* composite material, moulded paper pulp or recycled materials.

Panels of sound-absorbing material (damping material) are preferably made of mineral wool, such as ISOVER^{™} mineral wool panels. Sound damping panels made of other materials, such as rock wool, glass wool, or recycled material, can also be used. PEPP (porous expanded polypropylene) panels, polyester-based damping panels, such as 100% polyester fibre panels, can also be used.

The shell of the noise damper is preferably made of galvanized steel sheet.

### BRIEF DESCRIPTION OF DRAWINGS

The invention is described below with reference to the schematic figures, where:
Figure 1 shows a noise damper with the side panel removed in an axonometric view;
Figure 2 shows a noise damper with the end walls and side panels removed in an axonometric view;
Figure 3 shows a longitudinal section of the noise damper with end walls and side panels removed;
Figure 4 shows the cross section of the noise damper along the intersection A - A in Figure 3;
Figure 5 shows the cross-section of the noise damper along the intersection B - B in Figure 3;
Figure 6 shows the nozzle of the noise damper in side view;
Figure 7 shows the nozzle of the noise damper in top view;
Figure 8 shows the nozzle of the noise damper in end view;
Figures 9 to 11 show the axonometric views of the nozzle of the noise damper;
Figures 12 to 14 show the axonometric views of the noise damper nozzle frame model as seen from a round aperture.

### MODE(S) FOR CARRYING OUT THE INVENTION

For the sake of clarity, the same details and elements in different figures are marked with the same reference numbers.

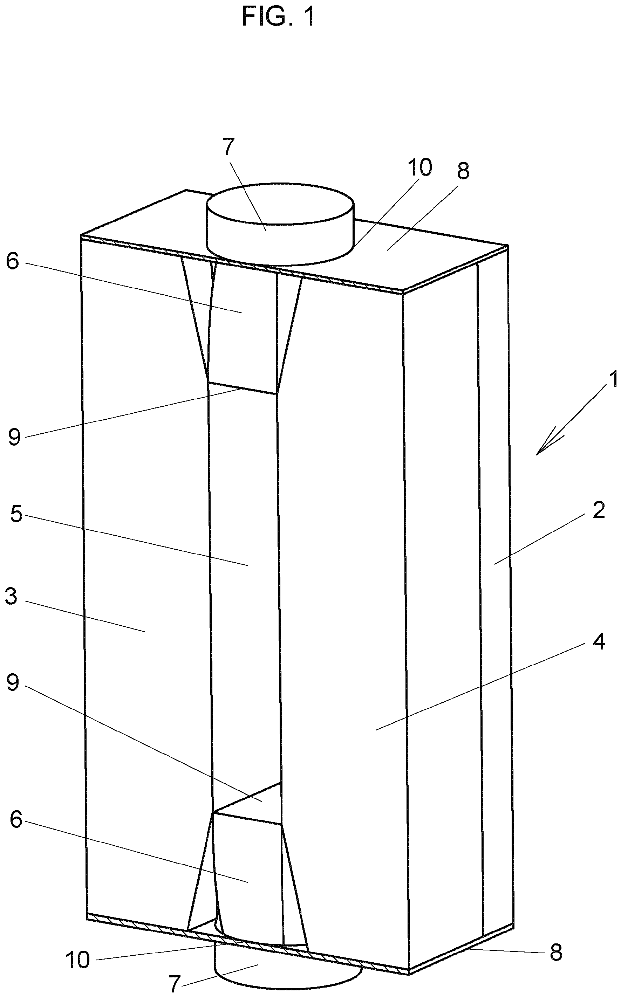

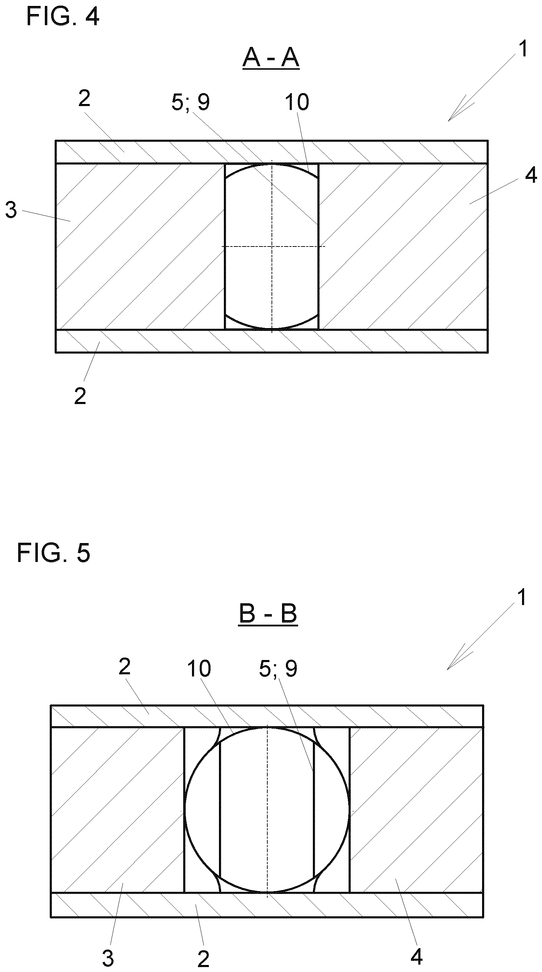

In Figure 1, the noise damper 1 has the outer shell removed from around the panels 2, 3, 4 of sound-absorbing material and from one of the top panels 2 of sound-absorbing material (both panels 2 are shown on Figure 4). An air duct 5 and nozzles 6 at the ends 5 of the air duct are shown between the top panel 2 of sound-absorbing material and the two side panels 3 and 4 of sound-absorbing material.

In Figure 1, the round cross-sectioned end of the nozzle 6 is fitted with a round cross-sectioned connecting part 7, which is positioned through the end wall 8 of the outer shell and designed to connect the noise damper to the ventilation pipe.

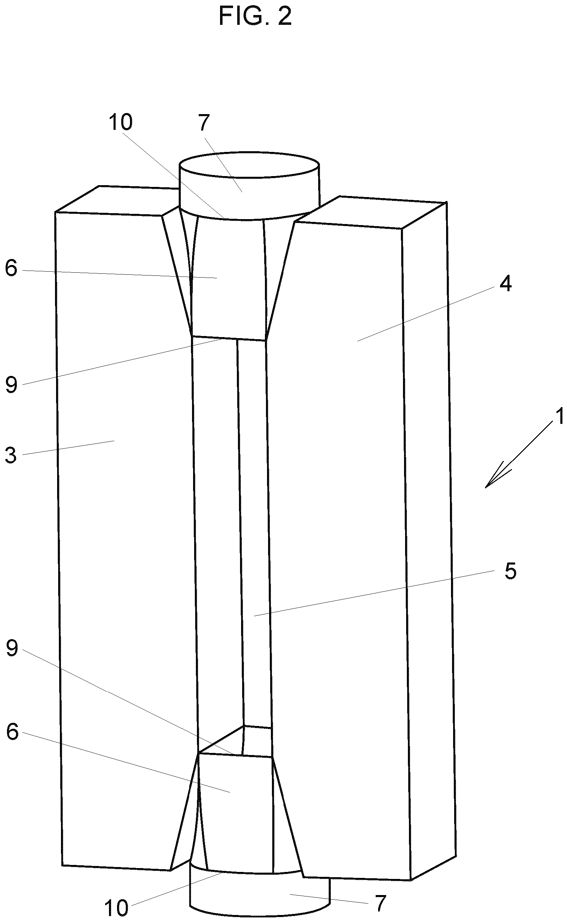

Figure 2 shows the noise damper 1 according to Figure 1 without the outer shell, top panels 2 (see Figure 4) and end walls 8 - only the nozzles 6 and the panels 3 and 4 forming the wider sides of the air duct 5 are shown.

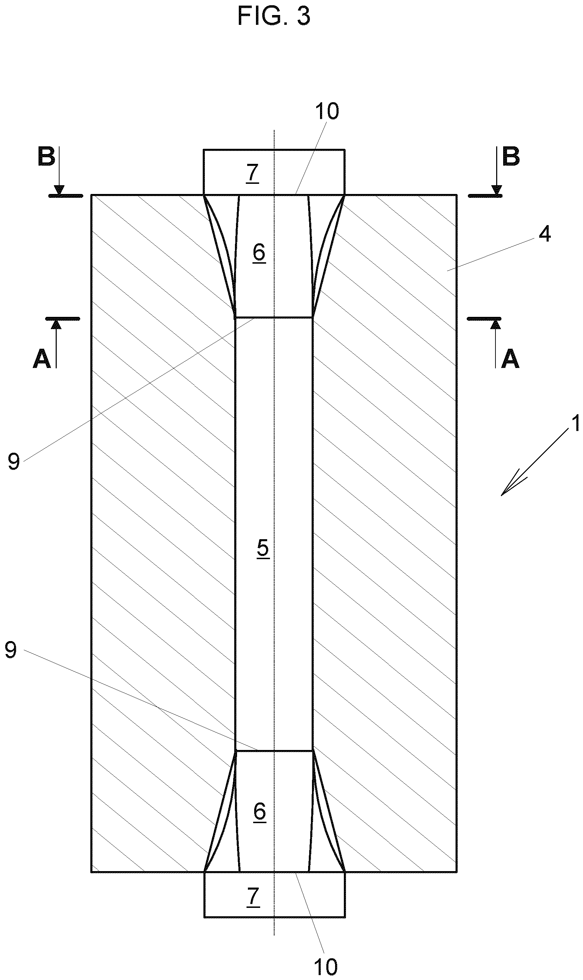

Figure 3 shows a longitudinal section of the noise damper 1 - it can be seen that the ends of the lateral panels 3 and 4 of sound-absorbing material have cut-outs to accommodate the nozzles 6.

Figures 4 and 5 show respectively sections A - A and B - B, the position of which is shown in Figure 3.

The noise damper 1 includes nozzles 6 at the ends of the air duct 5 to form aerodynamically smooth nozzles at each end of the air duct 5 from a rectangular cross-section of the air duct 5 to a round cross-section to connect to the ventilation pipe. The nozzles 6 are placed inside the noise damper 1 so that the round cross-section connecting part 7 at the round cross-section end of the nozzle 6 extends through the end wall 8 of the outer shell.

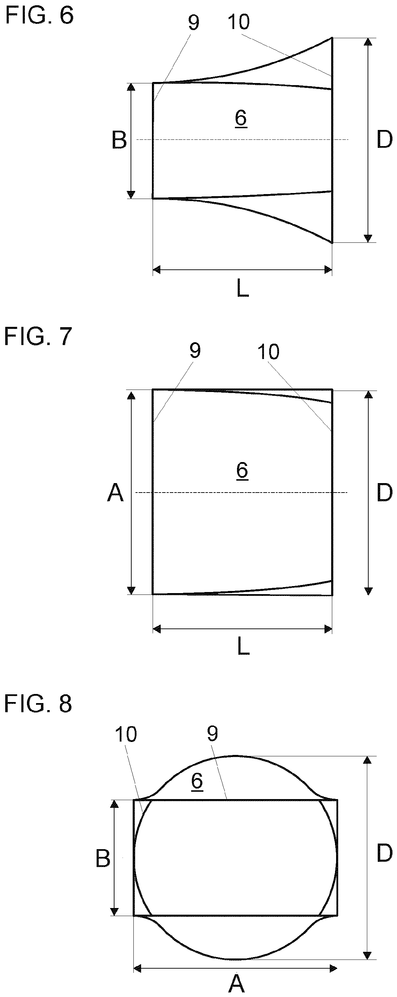

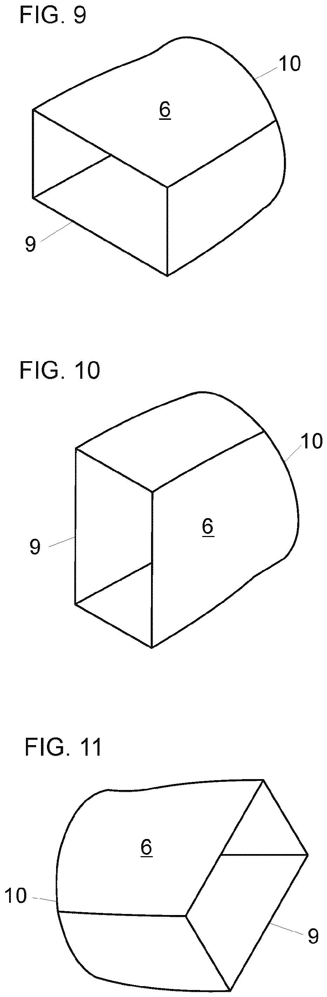

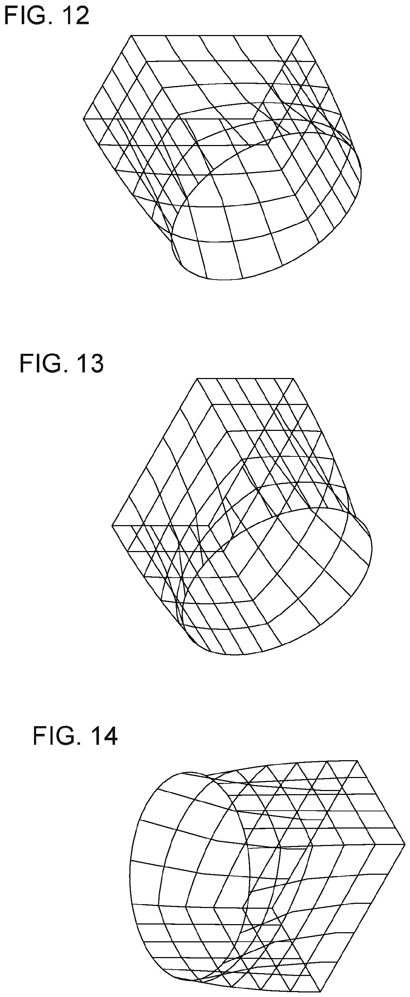

The shape and configuration of the nozzle 6 is shown in Figures 6 to 11, and in addition, Figures 12 to 14 show axonometric views of the frame model of the nozzle 6 to better represent its shape.

Figures 4 and 5 show that the damping duct, or air duct 5, is formed between two panels 2 of sound-absorbing material and the side panels 3 and 4. As the cross-section of the air duct 5 is a quadrangular, in this case rectangular, it can be easily formed between panels 2, 3, and 4 cut from flat blanks without the need to bend these panels. The nozzles 6 at the ends of the air duct 5 smoothly guide the air from one end of the noise damper 1 into the air duct 5 and smoothly out of the other end.

Preferably, the length L of the nozzle 6 between the rectangular cross-sectional end 9 and the round cross-sectional end 10 of the nozzle 6 is between 35% and 120% of the inner diameter D of the round end 10 of the nozzle 5.

Preferably, the longer side A of the rectangular cross-section end of the nozzle 6 is between 70% and 120% of the inner diameter D of the round end 10 of the nozzle 6.

The shorter side B of the rectangular cross-section end of the nozzle 6 is between 25% and 60% of the inner diameter D of the round end 10 of nozzle 6.

### LIST OF REFERENCE NUMBERS

- 1: noise damper
- 2: panel of sound-absorbing material
- 3: lateral panel of sound-absorbing material
- 4: lateral panel of sound-absorbing material
- 5: air duct
- 6: nozzle
- 7: connecting part
- 8: end wall
- 9: rectangular cross-section end of a nozzle
- 10: round cross-section end of a nozzle

## Claims

1. A noise damper (1) of a ventilation duct comprising an outer shell and panels (2, 3, 4) of sound-absorbing material therein, wherein an air duct (5) with a rectangular cross-section is formed between the panels (2, 3, 4), the noise damper (1) comprising at the ends of the air duct (5) nozzles (6) forming at each end of the air duct (5) a transition from a rectangular cross-section of the air duct (5) to a round cross-section for connection to the ventilation pipe, ***characterized in that*** the nozzles (6) are positioned inside the noise damper (1) such that the round cross-section connecting part (7) at the round cross-section end of the nozzle (6) extends through the end wall (8) of the outer shell.

2. A noise damper according to claim 1, ***characterized in that*** the length (L) of the nozzle (6) between the rectangular cross-sectional end (9) and the round cross-sectional end (10) of the nozzle (6) is 35% to 120% of the inner diameter (D) of the round end (10) of the nozzle (6).

3. A noise damper according to any of the previous claims, ***characterized in that*** the longer side (A) of the rectangular cross-sectional end (9) of the nozzle (6) is 70% to 120% of the inner diameter (D) of the round end (10) of the nozzle (6).

4. A noise damper according to any of the previous claims, ***characterized in that*** the shorter side (B) of the rectangular cross-sectional end (9) of the nozzle (6) is 25% to 60% of the inner diameter (D) of the round end (10) of the nozzle (6).

5. A noise damper according to any of the previous claims, ***characterized in that*** the panels (2, 3, 4) of sound-absorbing material are made of mineral wool.

6. A noise damper according to any of the claims 1 to 4, ***characterized in that*** the panels (2, 3, 4) of sound-absorbing material are made of glass wool.

7. A noise damper according to any of the claims 1 to 4, ***characterized in that*** the panels (2, 3, 4) of sound-absorbing material are made of porous expanded polypropylene or polyester fibre.

8. A noise damper according to any of the previous claims, ***characterized in that*** the nozzle (6) is made of metal.

9. A noise damper according to any of the claims 1 to 7, ***characterized in that*** the nozzle (6) is made of plastic.
